(19) Europäisches Patentamt
European Patent Office
Office européen des brevets

(11) **EP 1 359 781 B1**

(12) **EUROPÄISCHE PATENTSCHRIFT**

(45) Veröffentlichungstag und Bekanntmachung des Hinweises auf die Patenterteilung:
**09.05.2007   Patentblatt 2007/19**

(51) Int Cl.:
***H04Q 7/38*** *(2006.01)*

(21) Anmeldenummer: **02009988.3**

(22) Anmeldetag: **03.05.2002**

(54) **Verfahren und Kommunikationssystemvorrichtung zum Durchführen einer Verbindungsübergabe in einem Kommunikationssystem**

Method and communication system apparatus for handover in a communication system

Méthode et appareille système de communication pour transfert dans un système de communication

(84) Benannte Vertragsstaaten:
**AT BE CH CY DE DK ES FI FR GB GR IE IT LI LU MC NL PT SE TR**

(43) Veröffentlichungstag der Anmeldung:
**05.11.2003   Patentblatt 2003/45**

(73) Patentinhaber: **SIEMENS AKTIENGESELLSCHAFT**
**80333 München (DE)**

(72) Erfinder:
• **Costa, Elena, Dr.**
**85748 Garching (DE)**
• **Dillinger, Markus**
**81737 München (DE)**
• **Luo, Jijun**
**81677 München (DE)**

(56) Entgegenhaltungen:
**EP-A- 0 695 104         WO-A-00/79809**
**US-A- 5 682 416         US-A- 6 038 450**

**Beschreibung**

Die Erfindung bezieht sich auf ein Verfahren zum Durchführen einer Übergabe einer Verbindung (engl. Handover) in einem Kommunikationssystem, insbesondere einem MC-CDMA-Kommunikationssystem mit den oberbegrifflichen Merkmalen des Patentanspruchs 1 bzw. auf eine Kommunikationssystemvorrichtung zum Durchführen eines solchen Verfahrens.

In funkgestützten Kommunikationssystemen kommuniziert eine erste, in der Regel teilnehmerseitige Station mit je nach Standort und Verbindungsqualität einer oder mehreren netzseitigen Stationen über eine bzw. mehrere Funkschnittstellen. Dabei werden über eine aktive Verbindung Signale zwischen der teilnehmerseitigen Station und einer netzseitigen Station übertragen. Kommt die teilnehmerseitige Station in den Bereich einer anderen netzseitigen Station mit einer besseren Verbindungsqualität, so wird eine Verbindung zu dieser anderen netzseitigen Station aufgebaut und die aktive Verbindung wird auf diese neu aufgebaute oder neu aktivierte Verbindung übergeben, was üblicherweise als Handover bezeichnet wird. Die Durchführung des Handover kann dabei hart erfolgen, d. h. sämtliche derzeit in der Übertragung befindlichen Daten und Datenpakete gehen verloren und müssen neu übertragen werden, oder kann weich (soft oder softer) erfolgen, d. h. derzeit auf der Verbindungsstrecke befindliche Daten oder Datenpakete werden umgeleitet, so dass ein Verlust von Daten und eine erneute Übertragung nicht auftreten.

Nachfolgend werden kurz das MC-CDMA-Übertragungssystem (MC-CDMA: Multi Carrier-Code Division Multiple Access) und konventionelles soft bzw. softer Handover in UMTS-FDD (Universal Mobile Telecommunications System - Frequency Division Duplex) beschrieben, wie sie für sich bekannt sind.

Das MC-CDMA-Übertragungsschema besteht im wesentlichen aus der Verkettung (concatenation) einer Direktabfolge-Spreizspektrum-Modulation (Direct Sequence Spread-Spectrum (DS-SS)-Modulation) und einer Mehrträgerübertragung (multi carrier transmission). Der ursprüngliche Datenstrom eines einzelnen Teilnehmers bzw. einer einzelnen teilnehmerseitigen Station wird mit Hilfe eines vorgegebenen K-chips langen Spreizcodes gespreizt, wobei jeder Chip einen von K Unterträgern eines verwendeten Trägers der Schnittstelle moduliert, wobei die Unterträger innerhalb der verfügbaren Bandbreite gleichmäßig beabstandet sind. Im Prinzip können durch Verwendung orthogonaler Codes bis zu K teilnehmerseitige Stationen gleichzeitig deren Informationen bzw. Daten auf den gleichen Unterträgern simultan Spreizen.

Aus dem UMTS FDD ist es bekannt, dass eine mobile teilnehmerseitige Station gleichzeitig mit zwei netzseitigen Basisstationen verbunden werden kann. Bei der für sich bekannten grundlegenden Soft-Handover-Annäherung verarbeitet eine Funknetz-Steuereinrichtung das Signal, welches von einer i-ten netzseitigen Station für eine j-te teilnehmerseitige Station empfangen und über die Funkschnittstelle ausgesendet wird, wobei durch die Übertragung über die Funkschnittstelle ein Stör- bzw. Rauschanteil überlagert wird. Das Signal-zu-Rausch-Verhältnis (SNR) $\zeta_j$ ergibt sich bei einer Vielzahl von Stationen zu $\zeta_j = \max_{i \in \tilde{A}_j} \{\zeta_i\}$, wobei $\tilde{A}_j$, der aktive Satz von kommunizierenden Basisstationen für den j-ten Teilnehmer ist. Für den Fall einer Kommunikation der teilnehmerseitigen Station mit zwei Basisstationen, welche jeweils eine Antenne zum Versorgen einer Funkzelle aufweisen, ergibt sich der aktive Satz für die Teilnehmerstation j zu $\tilde{A}_j = \{1,2\}$.

Für den Fall, dass eine netzseitige Station mehr als einen Sektor bzw. eine Funkzelle kontrolliert, kann der so genannte Softer-Handover auf Basis der maximalen Verhältniskombination (maximum ratio combination) verarbeitet werden. Das Signal-Signalzu-Rausch-Verhältnis $\zeta_j$ für die j-te teilnehmerseitige Station ergibt sich dann zu $\zeta_j = \sum_{i \in \tilde{A}_j} \zeta_i$, wobei $\tilde{A}_j$ der aktive Satz für die j-te teilnehmerseitige Station ist. Der aktive Satz $\tilde{A}_j$, ist bei einer Basisstation mit einer Sektorantenne mit zwei Antennenelementen wiederum $\tilde{A}_j = \{1,2\}$.

In einem MC-CDMA-Kommunikationssystem wird das von den Sektorantennen zu versendende Signal der netzseitigen Station aufgrund der Mehrträger-Natur aus der Linearkombination aller verschiedener Unterträger-Signalkomponenten erzeugt. Auf Grund der typischen Frequenzauswahl der Funkkanäle werden verschiedene Signalkomponenten in jedem der Unterträger verschieden verschlechtert.

Aus US-A-6 038 450 ist ein Verfahren bekannt für Handover bei Mehrfachträger-Systemen wobei ein Teil der Unterträger zu mehreren Basisstationen weitergereicht werden. Dabei werden jeweils alle Unterträger von beiden vom Soft-Handover betroffenen Basisstationen ausgewertet, die Entscheidung zum Handover basiert allein auf bestimmten Kanälen, die unabhängig von der eigentlichen Datenübertragung sind.

Die Aufgabe der Erfindung besteht darin, Verfahren zum Durchführen einer Übergabe einer Verbindung in einem Kommunikationssystem, insbesondere in einem MC-CDMA-Kommunikationssystem zu verbessern. Ferner sollen Kommunikationssysteme mit Mitteln zum Durchführen solcher Verfahren bereitgestellt werden.

Diese Aufgabe wird durch Verfahren zum Durchführen einer Übergabe einer Verbindung in einem Kommunikationssystem sowie Kommunikationssysteme zum Durchführen solcher Verfahren mit den jeweiligen Merkmalen der unabhängigen Patentansprüche gelöst.

Nach einem ersten erfindungsgemäßen Verfahren zum Durchführen einer Verbindungsübergabe in einem Kommunikationssystem, welches zumindest zwei netzseitige Stationen und zumindest einer teilnehmerseitigen Station aufweist, werden Signale auf Verbindungen zwischen der teilnehmerseitigen Station und den netzseitigen Stationen auf einer jeweils zugeordneten Mehrzahl von Unterträgern über eine Funk-Schnittstelle übertragen, wobei Signale auf einer ersten Verbindung zu einem Antennenelement einer Sektorantenne einer zweiten netzseitigen Station unter Verwendung einer Mehrzahl von Unterträgern übertragen werden. Abhängig von ermittelten aktuellen oder erwarteten zukünftigen Übertragungseigenschaften wird auf den jeweiligen Unterträgern eine Verbindungsübergabe initiiert, und im Rahmen der Verbindungsübergabe eine jeweils zweite Verbindung zu einem weiteren Antennenelement der Sektorantenne der zweiten netzseitigen Station und zu einer Antenne einer ersten netzseitigen Station aufgebaut. Anschließend wird auf allen oder auf einzelnen ausgewählten der Mehrzahl von Unterträgern der Verbindungen ein jeweiliges Signal-zu-Rausch-Verhältnis bestimmt, und anhand der bestimmten Signal-zu-Rausch-Verhältnisse der Verbindungen eine Wahl getroffen, ob eine Verbindungsübergabe zu dem weiteren Antennenelement der Sektorantenne der zweiten netzseitigen Station gemäß einer Softer-Verbindungsübergabe oder zu der Antenne der ersten netzseitigen Station gemäß einer Soft-Verbindungsübergabe durchgeführt wird. Im Fall einer gewählten Softer-Verbindungsübergabe zu dem weiteren Antennenelement der Sektorantenne der zweiten netzseitigen Station wird dabei eine maximale Verhältniskombination von empfangenen Signalen der ersten und zweiten Verbindung durchgeführt, währenddessen im Fall einer gewählten Soft-Verbindungsübergabe Signale der ersten und zweiten Verbindung nach einem Diversitätsschema empfangen werden, wobei für jeden Unterträger eine netzseitige Station ausgewählt wird, welche ein höheres bestimmtes Signal-zu-Rausch-Verhältnis bietet.

Nach einem zweiten erfindungsgemäßen Verfahren zum Durchführen einer Verbindungsübergabe in einem Kommunikationssystem, welches zumindest zwei netzseitige Stationen und zumindest einer teilnehmerseitigen Station aufweist, werden Signale auf Verbindungen zwischen der teilnehmerseitigen Station und den netzseitigen Stationen auf einer jeweils zugeordneten Mehrzahl von Unterträgern über eine Funk-Schnittstelle übertragen, wobei Signale auf einer ersten Verbindung zu einem Antennenelement einer Sektorantenne einer zweiten netzseitigen Station unter Verwendung einer Mehrzahl von Unterträgern übertragen werden. Abhängig von ermittelten aktuellen oder erwarteten zukünftigen Übertragungseigenschaften wird auf den jeweiligen Unterträgern eine Verbindungsübergabe initiiert, und im Rahmen der Verbindungsübergabe eine zweite Verbindung zu einer Antenne einer ersten netzseitigen Station gemäß einer Soft-Verbindungsübergabe aufgebaut. Auf der Mehrzahl von Unterträgern der Verbindungen werden anschließend ein jeweiliges Signal-zu-Rausch-Verhältnis bestimmt, und Signale der ersten und zweiten Verbindung nach einem Diversitätsschema empfangen, wobei für jeden Unterträger eine netzseitige Station usgewählt wird, welche ein höheres bestimmtes Signal-zu-Rausch-Verhältnis bietet.

Erfindungsgemäße Kommunikationssysteme mit zumindest zwei netzseitigen Stationen, zumindest einer die zumindest zwei netzseitigen Stationen steuernden Stationssteuerung sowie zumindest eine teilnehmerseitige Station weisen jeweils Mittel zum Durchführen der erfindungsgemäßen Verfahren auf.

Vorteilhafte Ausgestaltungen des ersten erfindungsgemäßen Verfahrens sind Gegenstand von abhängigen Ansprüchen.

Die Übertragungseigenschaften bestimmen sich vorteilhafterweise aus unterschiedlichen Verschlechterungen, beispielsweise durch Fading, der Übertragungsqualität auf den verschiedenen der Unterträger. Als Unterträger werden insbesondere verschiedene Unter-Frequenzbänder eines Träger-Frequenzbandes verwendet. Die Übertragung von Daten und Signalen ist dabei nach dem Mehrträger-Prinzip (multi carrier) durchführbar.

Empfängerseitig kann eine Bestimmung oder Abschätzung der Übertragungseigenschaften anhand des Fadingprofils des Trägerspektrums durchgeführt werden. Die Übertragungseigenschaften können dabei insbesondere aus verschiedenen Signal-zu-Rausch-Verhältnissen einzelner der verschiedenen Unterträger bestimmt werden.

Für die Übertragung wird vorteilhafterweise für jeden Antennenpunkt ein Signalvektor $\vec{I}$ als Summe über die Signale $\hat{I}_{i,k}$ der netzseitigen Stationen bestimmt, insbesondere gemäß

$$\vec{\hat{I}} = \left\{ \sum_{i \in A_j} \alpha_{i,k}{}^* \cdot \hat{I}_{i,k} \,\middle|\, k = 1,2... \right\} \cdot$$

Bei der Auswahl einer durchzuführenden Übergabe kann zwischen einem Soft-Handover und einem Softer-Handover ausgewählt werden, wobei ein Softer-Handover insbesondere gemäß der Maximum-Ratio-Kombination durchgeführt wird.

Vorteilhafterweise weist zumindest eine der netzseitigen Stationen eine Sektorantenne mit verschiedenen Antennenelementen zum Aufbauen von zumindest zwei eigenständigen Verbindungen zu der teilnehmerseitigen Station an einem Sende/Empfangsort auf.

Im wesentlichen wird die Entscheidung eines Soft- oder Softer-Handover unter Verwendung einer bestimmbaren Information aus allen oder aus einzelnen ausgewählten der Unterträger getroffen, um vorteilhafterweise die inhärente Übertragungsdiversität in frequenzselektiven Fadingkanälen des MC-CDMA-Systems zu verbessern, was zu einer höheren Übertragungsqualität führt.

Anwendungen bieten sich insbesondere in den zellularen Funk-Kommunikationssystemen gemäß den in Entwicklung befindlichen Standards der dritten Generation digitaler Mobilfunksysteme an. Diese Systeme beruhen voraussichtlich auf dem Mehrträger-Übertragungskonzept und werden mit einer sehr hohen Datenrate betrieben werden, was zu hochfrequenzselektiven Kanälen führt.

Ein Ausführungsbeispiel wird nachfolgend anhand der Zeichnung näher erläutert. Es zeigen:

Fig. 1 eine Anordnung von zwei Basisstationen mit einer bzw. drei Funkzellen und einer über diese kommunizierenden teilnehmerseitigen Station;

Fig. 2 die Verarbeitung von zu versendenden Signalen gemäß einem bevorzugten MC-CDMA-Schema;

Fig. 3 eine Anordnung von Basisstationen mit jeweils einer Funkzelle und einer mit dieser kommunizierenden teilnehmerseitigen Station gemäß UMTS FDD;

Fig. 4 eine Anordnung mit einer Basisstation, welche eine Sektorantenne zum Versorgen von drei Funkzellen aufweist, sowie einer teilnehmerseitigen Station, die damit kommuniziert;

Fig. 5 ein Frequenzspektrum zum Darstellen der verschiedenen Unterträger in einem MC-CDMA-System; und

Fig. 6 eine Darstellung der Signalverarbeitung zum Durchführen eines Soft-Softer-Handover bei MC-CDMA.

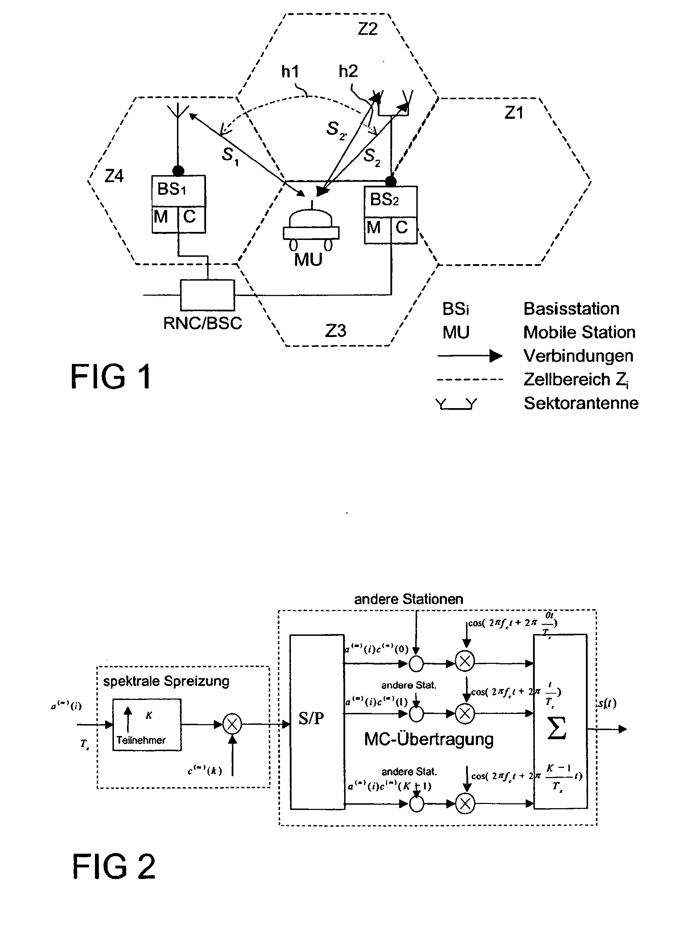

Wie aus Fig. 2 ersichtlich, wird eine zu übertragenden Datenfolge bzw. Information als ursprüngliches Signal $a^{(m)}(i)$ in einem ersten Verarbeitungsschritt spektral gespreizt. Auf die in zeitlicher Abfolge $T_s$ eintreffenden Daten wird dabei ein der teilnehmerseitigen Station bzw. dem Teilnehmer zugeordneter Code aus einer K-chip-langen Spreizcodefolge $c^{(m)}(k)$ angewendet. Dabei gilt für die Indizes $s = 0,1,..., K-1$ und $k = 0,1,...,K-1$. Bei einem derartigen System können Signale von K teilnehmerseitigen Stationen bzw. K verschiedene Datenfolgen kodiert und gleichzeitig über den Träger übertragen werden.

Das derart gespreizte Signal wird in einem zweiten Verfahrensschritt gemäß dem Prinzip der Multiträger-Übertragung (MC-Übertragung) von einem einzelnen Signal in einer Aufspreizungseinrichtung S/P in K Datenströme bzw. Datenpfade aufgesplittet. In die einzelnen aufgesplitteten Datenpfade mit den aufgesplitteten Signalen $a^{(m)}(i)c^{(m)}(0)$, $a^{(m)}(i)c^{(m)}(1)$, ..., $a^{(m)}(i)c^{(m)}(K-1)$ werden die entsprechenden Signale anderer teilnehmerseitiger Stationen bzw. anderer unabhängiger Datenquellen eingemischt. In einem weiteren Schritt wird auf jeden der Datenpfade eine Modulation angewendet, und zwar durch das Anwenden einer Phasenverschiebung mit dem Term $\cos(2\pi f_c t + 2\pi \cdot 0 \cdot t/T_s)$, $\cos(2\pi f_c t + 2\pi \cdot 1 \cdot t/T_s)$, ..., $\cos(2\pi f_c t + 2\pi \cdot (K-1) \cdot t/T_s)$. Die Signalfolgen der einzelnen aufgesplitteten Pfade werden dann in einem abschließenden Schritt aufsummiert, um ein auszugebendes und über die Schnittstelle, insbesondere Funk-Schnittstelle zu übertragendes Signal $s_i(t)$ zu erzeugen und auszugeben.

Wie dies aus Fig. 1 ersichtlich ist, kann eine einzelne teilnehmerseitige Station MU über eine Funk-Schnittstelle mit mehreren netzseitigen Stationen $BS_1$, $BS_2$ gleichzeitig kommunizieren, wie dies aus UMTS FDD Standard für sich bekannt ist. Wie dargestellt versorgt jede der netzseitigen Stationen, insbesondere Basisstationen $BS_1$ bzw. $BS_2$, jeweils eine Funkzelle $Z_1$ bzw. $Z_2$. Die netzseitigen Stationen sind über eine Stationssteuereinrichtung, insbesondere Basisstations-Steuereinrichtung BSC (Base Station Controller) bzw. Funknetzsteuereinrichtung RNC (Radio Network Controller), als übergeordneter Steuereinrichtung gesteuert, wobei zu versendende oder zu empfangende Daten ebenfalls über diese zentrale netzseitige Steuereinrichtung BSC übertragen werden. Netzseitig können mehrere derartige Anordnungen von zentralen Steuereinrichtungen BSC und netzseitigen Stationen $BS_1$, $BS_2$ im Kommunikationssystem enthalten sein, wobei die netzseitigen Steuereinrichtungen BSC beispielsweise zusätzlich von einer nicht dargestellten übergeordneten Steuereinrichtung gesteuert und verwaltet werden.

Wie dargestellt bestehen zwischen der teilnehmerseitigen, insbesondere mobilen, Station MU und den Antennen der netzseitigen Stationen $BS_1$, $BS_2$ über die Funkschnittstelle Verbindungen $S_1$ bzw. $S_2$ zum Übertragen von Signalen, insbesondere Informationen und Daten. Eine erste dieser Verbindungen dient dabei als aktive Verbindung $S_1$ zum Übertragen von Daten oder Informationen während die zweite Verbindung $S_2$ aktiv oder passiv aufgebaut und bereitgehalten wird. Stellt eine der Netzeinrichtungen, insbesondere die Stationssteuereinrichtung BSC/RNC fest, dass die zweite Verbindung $S_2$ eine bessere Übertragungsqualität bieten kann, so wird die aktive Signalübertragung von der ersten Signal-Verbindung $S_1$ auf die zweite Signal-Verbindung $S_2$ übergeben, was nachfolgend als Handover bezeichnet wird.

Bei dem für sich bekannten Basis-Soft-Handover aus dem UMTS FDD Standard verarbeitet die Stationssteuereinrichtung BSC/RNC das Signal Si, welches von der i-ten netzseitigen Station für die j-te teilnehmerseitige Station MU empfangen wurde, wobei das Signal-zu-Rausch-Verhältnis (SNR) $\zeta_j$ zu $\zeta_j = \max_{i \in \tilde{A}_j} \{\zeta_i\}$ resultiert, wobei $\tilde{A}_j$ den aktiven Satz von Parametern bzw. kommunizierenden netzseitigen Basis-Stationen BS für die j-te teilnehmerseitige Station darstellt. Bei der in Fig. 1 dargestellten Situation mit i = 2 netzseitigen Stationen $BS_1$, $BS_2$ ergibt sich für den Parameter des aktiven Satzes $\tilde{A}_j$ = {1,2 }.

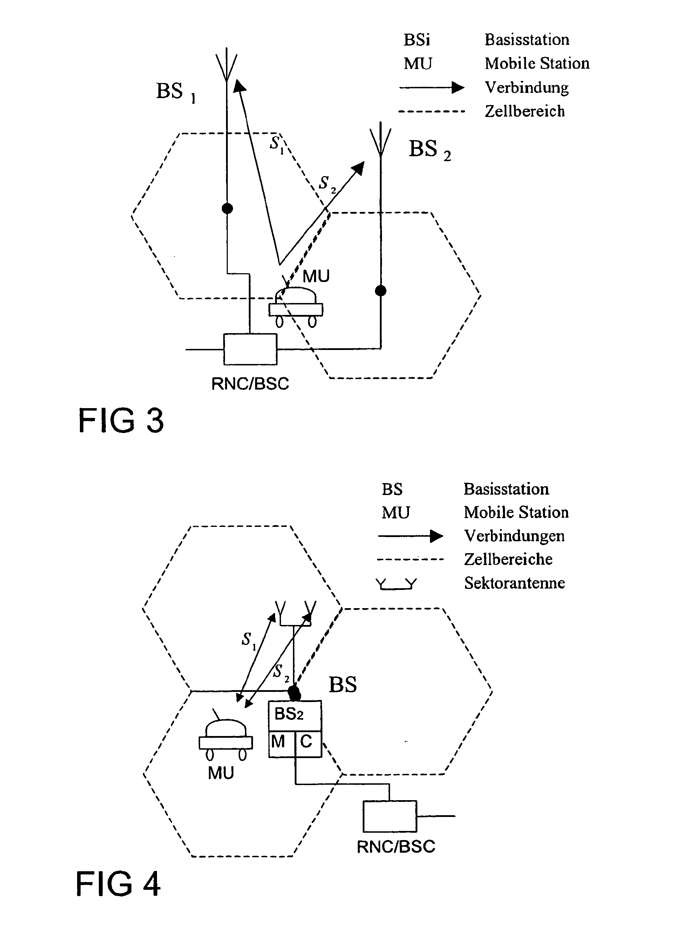

Wie dies aus Fig. 4 ersichtlich ist, kann eine netzseitige Station BS auch mehr als eine einzelne Funkzelle, beispielsweise 3 Funkzellen $Z_1$, $Z_2$, $Z_3$ versorgen. Die netzseitige Station BS weist dabei wiederum Verbindungen zu anderen netzseitigen Einrichtungen wie einer Basisstations-Steuereinrichtung BSC bzw. zu einer Funknetz-Steuereinrichtung RNC auf. Zum Versorgen einer Vielzahl von Funkzellen $Z_1$ - $Z_3$ weist die dargestellte netzseitige Station BS entweder eine Vielzahl einzelner von einander beabstandeter Antennen oder, wie dargestellt eine Sektorantenne mit mehreren Antennenelementen an einem Ort auf. Die Erzeugung des über die Schnittstelle zu übertragenden Signals erfolgt dabei derart, dass die einzelnen Antennenelemente der Sektorantenne jeweils spezifische Signalkomponenten zugeführt bekommen, so dass das resultierende Gesamtsignal der Sektorantenne jeweils bestimmte Signalanteile in bestimmte gewünschte Richtungen stärker als in andere Richtungen aussendet bzw. eine entsprechende Empfangscharakteristik für empfangene Signale aufweist. Zur Verarbeitung von zu versendenden oder empfangenen Signalen weist die netzseitige Station BS insbesondere auch Speicher M und eine Steuereinrichtung C auf.

Wiederum kommuniziert eine dargestellte teilnehmerseitige Station MU mit der Basisstation BS, wobei beispielsweise. zwei Signal-Verbindungen $S_1$ und $S_2$ zwischen diesen Stationen MU, BS über die Funkschnittstelle aufgebaut werden.

In einer solchen Situation kann der so genannte Softer-Handover als Übergabe von einer der beiden Signal-Verbindungen $S_1$ als aktiver Verbindung auf die zweite der beiden Signal-Verbindungen $S_2$ als zuvor passive und danach aktive Verbindung zum Übertragen von Daten und Informationen durchgeführt werden. Die Signale werden dafür gemäß der so genannten maximalen Verhältniskombination (maximum ratio combination) verarbeitet. Das Signal-zu-Rausch-Verhältnis $\zeta_j$ für die j-te teilnehmerseitige Station MU ergibt sich dann als Summe der einzelnen Signal-zu-Rausch-Verhältnisse $\zeta_i$ für die einzelnen Sektorantennenverbindungen, also zu $\zeta_j = \sum_{i \in \tilde{A}_j} \zeta_i$, wobei wiederum $\tilde{A}_j$ der aktive Satz für die j-te teilnehmerseitige Station ist und $\zeta_j$ das Signal-Rausch-Verhältnis der Verbindungen $S_1$ und $S_2$ zu den beiden Sektorantennenelementen der gleichen netzseitigen Stationsposition zugeordnet sind. Bei dem in Fig. 4 dargestellten Ausführungsbeispiel mit zwei Antennenelementen einer Sektorantenne ergibt sich für den Parameter $\tilde{A}_j$={1,2 }. Dies ist für sich bekannt aus J. Luo, M. Dillinger, etc., Investigations and Improvements on the Interhandover Time of the Soft Handover in WCDMA, 3Gwireless2000, San Francisco, June, 2000, U.S.A., J. Luo, M. Dillinger, etc., Optimal timer setting for Soft Handover in WCDMA, 3Gwireless2000, San Francisco, June 2000, U.S.A. und J. Luo, M. Dillinger, etc., Adaptive Timer Settings for the Soft Handover Algorithm with Different System Load in WCDMA, ICCT 2000, Beijing, Aug. 2000, China.

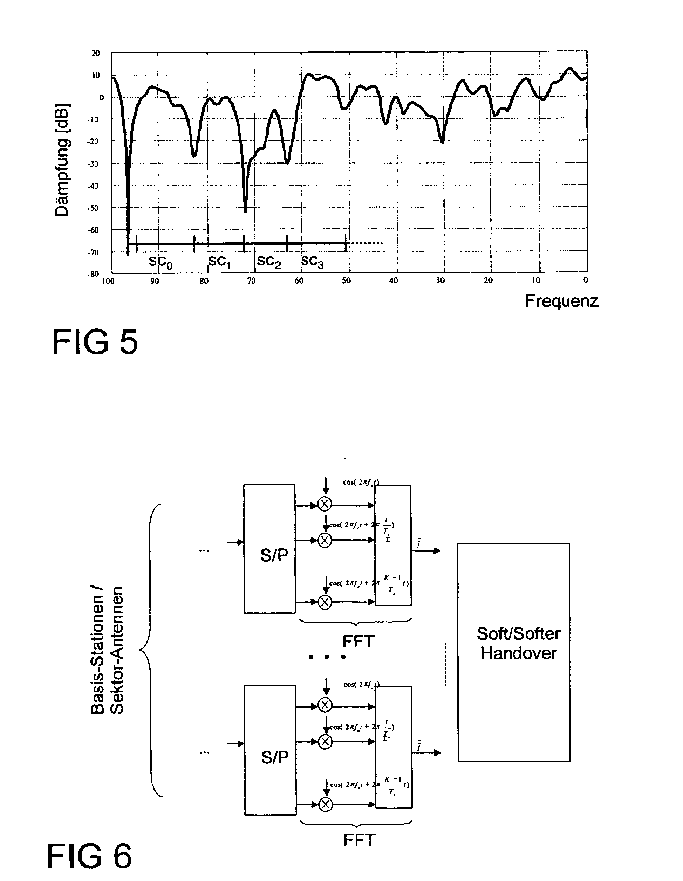

Wie bereits ausgeführt ergibt sich bei einem MC-CDMA-System das Gesamtsignal (S), welches über die einzelnen Antennenelemente einer Sektorantenne der netzseitigen Station BS übertragen wird, durch die Linearkombination aller verschiedenen Unterträger-Signalkomponenten $sc_k$, und zwar aufgrund der Mehrträgernatur (multi carrier). Wie aus Fig. 5 ersichtlich ergibt sich aufgrund der typischen Frequenzselektivität des Funkkanals, dass die einzelnen Signalkomponenten $sc_k$ mit k = 1,2,....,K in den einzelnen der Unterträger unterschiedlich verschlechtert übertragen werden.

Für die Anwendung eines verbesserten Handovers soll die Möglichkeit der Auflösung eines Ausblend-Prozesses (Fading) in jedem Unterträger ausgenutzt werden, welche die Empfänger von MC-CDMA-Systemen bieten. Je nach Übertragungsrichtung können Empfänger dabei die teilnehmerseitigen Stationen MU oder die netzseitigen Stationen BS sein. Das nachfolgend beschriebene System eines Handover soll eine Umschaltmöglichkeit zwischen dem für sich bekannten Soft-Handover und dem für sich bekannten Softer-Handover bieten und wird daher nachfolgend auch als Soft/Softer-Handover bezeichnet. Dabei soll das frequenzselektive Soft/Softer-Handover per Definition zwei Kategorien aufweisen. Erstens die selektive Diversität im Soft-Handover-Fall und zweitens die maximum ratio combination im Softer-Handover-Fall.

Die Empfangseinrichtung, insbesondere die Steuereinrichtung C jeder netzseitiger Station BSi bzw. $BS_1$, $BS_2$ sollte die Fähigkeit aufweisen, das Ausblendprofil bzw. Fading-Profil abzuschätzen bzw. zu berechnen, und zwar bis zu der Unterträgerauflösung hin, d. h. die Fähigkeit aufweisen, abzuschätzen, wie stark der Schwund bzw. das Fading in jedem der einzelnen oder jedem der ausgewählten Unterträger ist, da diese Größe im Verhältnis zum Signal-zu-Rausch-Verhältnis in dem zugeordneten Unterträger $sc_k$ steht. In diesem Fall lässt sich das Signal-zu-Rausch-Verhältnis für jeden der MU-BS-Träger bestimmen, d. h. der Unterträger zwischen teilnehmerseitiger und netzseitiger Station MU bzw. BS, dargestellt als $\zeta_{j,i,k}$, wobei j der Index für die teilnehmerseitigen Stationen MU, i der Index für die netzseitigen Stationen BS und k der Index für den Unterträger ist.

Im Soft-Handover-Fall wird das selektive Diversitätsschema verwendet, um die richtige bzw. best geeignetste netzseitige Station $BS_i$ für jeden einzelnen Unterträger auszuwählen, um das Frequenzdomänensignal entsprechend zuzuführen bzw. zu bestimmen.

Für die teilnehmerseitige Station j wird der empfangene Informationsstrom bzw. Datenstrom $\vec{I} = \vec{S} \cdot \widetilde{\mathbf{T}}$ in einem Fourier-Transformations-Block, insbesondere einem Fast-Fourier-Transformations-Block (FFT), gebildet durch

$$\vec{I} = \vec{S} \cdot \widetilde{\mathbf{T}} \, , \tag{1}$$

wobei $\vec{S}$ das empfangene Zeitdomänensignal bzw. Signal in zeitlicher Abfolge ist und $\widetilde{\mathbf{T}}$ die FFT-Transformationsmatrix darstellt, um das Signal $\vec{S}$ aus der zeitlichen Ebene in den Frequenzbereich bzw. die Frequenzdomäne zu integrieren.

Der Soft-Handover sollte in einer Art und Weise angewendet werden, um die beste netzseitige Station $BS_i$ auszuwählen, um das Signal $s_j$ von dieser in jedem der Unterträger $sc_k$ derart bereitzustellen, wie sich dies aus der nachfolgenden Gleichung ergibt:

$$\vec{I} = \left\{ \hat{I}_{im,k} \middle| k = 1,2,... \right\} \ \text{mit} \ \ im \middle| \zeta_{im,k} = \max\nolimits_{i\in\bar{A}_j} \left\{ \zeta_{i,k} \right\} . \tag{2}$$

Dabei steht "im" für die Basisstation BSi im aktiven Satz der teilnehmerseitigen Station j, welche das höchste Signal-zu-Rausch-Verhältnis im Träger k bietet.

In dem Softer-Handover-Fall wird die Maximum-Ratio-Kombination aufgrund der Kenntnis von jedem einzelnen Unterträger $sc_k$ ausgeführt. Dazu wird von empfangenen Signalen die Signalqualität der einzelnen Unterträger bzw. der Dämpfung und/oder das Signal-zu-Rausch-Verhältnis bestimmt, wie dies auch aus Fig. 5 ersichtlich ist. Nach der Fourier-Transformation gemäß Gleichung (1) wird die Maximum-Ratio-Kombination durchgeführt. Der sich dann ergebende Signalvektor $\vec{I}$ ergibt sich zu

$$\vec{I} = \left\{ \sum_{i\in\bar{A}_j} \alpha_{i,k}^{\,*} \cdot \hat{I}_{i,k} \middle| k = 1,2... \right\} \, , \tag{3}$$

wobei das sich ergebende Signal $\hat{I}_{i,k}$ das Signal ist, welches für jeden einzelnen Sektorantennenpunkt verarbeitet bzw. erzeugt wird, welcher in dem aktiven Satz $\widetilde{\mathbf{A}}_j$ definiert ist, $\alpha_{i,k}$ die Fading- bzw. Schwundvariable gemäß dem Verhältnis von der Antenne i der netzseitigen Station $BS_i$ und dem Träger bzw. Unterträger $sc_k$ ist und "*" eine komplexkonjugierte Operation zum Erreichen des Maximums gemäß der Cauchy-Schwartz-Ungleichung indiziert.

In dem Fall, in dem die teilnehmerseitige Station MU gleichzeitig Verbindungen $S_1$ bzw. $S_2$, $S_2$, zu verschiedenen netzseitigen Stationen $BS_1$ bzw. $BS_2$ an verschiedenen Orten und zu verschiedenen Sektorantennen an einem einzelnen Ort aufweist, wie dies aus Fig. 1 ersichtlich ist, können der Soft-Handover und der Softer-Handover verfahrenstechnisch kombiniert werden.

Anstelle der Verbindung zu verschiedenen netzseitigen Basis-Stationen an verschiedenen Orten reicht auch die Verbindung zu verschiedenen eigenständigen Antennenanordnungen an verschiedenen Orten, wobei diese Antennen nicht als Sektorantennen an einem einzigen Ort anzusehen sind. Für eine teilnehmerseitige Station MU gibt sich in solchen Situation die Möglichkeit, wahlweise einen Soft-Handover von einer Verbindung zu einem Ort zu einer Verbindung an einem anderen Ort als auch alternativ einen Verbindungswechsel zwischen Verbindungen zu einem einzigen Ort mit verschiedenen Antennen einer Sektorantenne durchzuführen.

Wie dies aus der beispielhaften Fig. 1 ersichtlich ist, hat eine teilnehmerseitige Station MU somit eine erste

Signalverbindung $S_1$ zu einer Antenne einer ersten Basisstation bzw. netzseitigen Station $BS_1$ sowie zwei Signalverbindungen $S_2$ und $S_{2'}$ zu einer zweiten netzseitigen Station $BS_2$ mit einer Sektorantenne, welche zumindest i = 2 Antennenelemente aufweist. Ist die aktive Verbindung die erste Signal-Verbindung $S_2$ der beiden Verbindungen $S_2$, $S_{2'}$ zur Sektorantenne der zweiten netzseitigen Station $BS_2$, so kann wahlweise der Softer-Handover h2 zu der zweiten Signal-Verbindung $S_{2'}$ bei der Sektorantenne dieser netzseitigen Station $BS_2$ als auch der Soft-Handover h1 zu der Signal-Verbindung $S_1$ zur Antenne der ersten netzseitigen Station $BS_1$ durchgeführt werden.

Eine Schaltungsanordnung zum Durchführen eines solchen Soft/Softer-Handovers ist aus Fig. 6 ersichtlich. Kern sind dabei eine Vielzahl von Schaltungsanordnungen, wie sie für sich bereits an Hand von Fig. 2 beschrieben wurden, wobei jeder dieser Schaltungsanordnungen eine der Signal-Verbindungen $S_1$, $S_2$, $S_{2'}$ zugeordnet ist. Die Ausgangssignale werden einer Auswahleinrichtung bzw. Steuereinrichtung zum Auswählen der idealen dieser Verbindungen als zukünftiger aktiver Verbindung zugeführt, wobei die Auswahleinrichtung Bestandteil des Speichers M und der Steuereinrichtung C in der Basisstation bzw. netzseitigen Station $BS_1$, $BS_2$ aber auch einer übergeordneten Station wie der Basisstations-Steuereinrichtung BSC oder der Funknetz-Steuereinrichtung RNC sein kann. Die Eingangssignale dieser einzelnen Schaltungen stammen von den jeweiligen Einzelantennen, wie der Antenne der ersten netzseitigen Station $BS_1$, oder einzelnen der Antennen einer Sektorantenne, wie der Sektorantenne der zweiten netzseitigen Station $BS_2$.

In der Einrichtung Soft/Softer-Handover zum Auswählen der idealen Verbindung werden Daten bzw. Informationen der Subträger verwendet, um das Signal mit Blick auf eine bessere Gesamtsystem-Leistungsfähigkeit durch Optimierung des Signal-zu-Rausch-Verhältnisses zu optimieren. Insbesondere kann die Komplexität des Soft-Handover für verschiedene netzseitige Stationen reduziert werden, wenn ein Softer-Handover angewendet werden kann, wobei insbesondere auf die $\alpha_{i,k}$-Information zurückgegriffen wird. Vorzugsweise werden die Signal-zu-Rausch-Verhältnisse SNR der einzelnen Verbindungen fortwährend analysiert und die Verbindung mit dem besten Signal-zu-Rausch-Verhältnis wird jeweils als aktive Verbindung für zukünftige Übertragungen verwendet. Handelt es sich dabei um eine momentan nicht aktiv zur Datenübertragung verwendete Verbindung, so wird ein Soft-Handover oder ein Softer-Handover durchgeführt.

In der Einrichtung Soft/Softer-Handover werden somit vorteilhafterweise insbesondere mit Blick auf Zeitverzögerungen bzw. Laufzeitunterschiede und den Berechnungsaufwand bei der Daten- und Signalverarbeitung verschiedene Handover-Schemata durchgeführt. Falls sich an einem Standort Sektorantennen befinden, d.h. die Verbindungen durch verschiedene Sektorantennenelemente getrennt sind, kann das Signal zumeist leicht bei einem Softer-Handover verarbeitet werden, da dies typischerweise ein Fall ist, bei dem die Signalankunft über verschiedene Verbindungen mit ähnlichen Verzögerungs- und Kanalfadingbedingungen in jedem Unterträger leicht mit dem Signal kohärent kombiniert werden kann (maximum ratio combination). Für den Fall, dass das Netz jedoch keine schnelle Verbindung zwischen Basisstation BSi und Stationssteuereinrichtung BSC/RNC bieten kann oder dass die Stationssteuereinrichtung BSC/RNC keine komplizierte kohärente Kombination von Signalen von verschiedenen Basisstationen bzw. Verbindungen an verschiedenen Standorten ermöglicht, kann jedoch zumindest noch ein Soft-Handover durchgeführt werden.

**Patentansprüche**

1. Verfahren zum Durchführen einer Verbindungsübergabe in einem Kommunikationssystem mit

   - zumindest zwei netzseitigen Stationen ($BS_1$,$BS_2$) und
   - zumindest einer teilnehmerseitigen Station (MU), bei dem
   - Signale auf Verbindungen ($S_1$, $S_2$, $S_{2'}$) zwischen der teilnehmerseitigen Station (MU) und den netzseitigen Stationen ($BS_1$, $BS_2$) auf einer jeweils zugeordneten Mehrzahl von Unterträgern ($sc_k$) über eine Funk-Schnittstelle übertragen werden, wobei Signale auf einer ersten Verbindung ($S_2$) zu einem Antennenelement einer Sektorantenne einer zweiten netzseitigen Station ($BS_2$) unter Verwendung einer Mehrzahl von Unterträgern übertragen werden,
   - abhängig von ermittelten aktuellen oder erwarteten zukünftigen Übertragungseigenschaften auf den jeweiligen Unterträgern ($sc_k$) eine Verbindungsübergabe initiiert wird,
   - im Rahmen der Verbindungsübergabe eine jeweils zweite Verbindung ($S_{2'}$, $S_1$) zu einem weiteren Antennenelement der Sektorantenne der zweiten netzseitigen Station ($BS_2$) und zu einer Antenne einer ersten netzseitigen Station ($BS_1$) aufgebaut wird,
   - auf allen oder auf einzelnen ausgewählten der Mehrzahl von Unterträgern ($sc_k$) der Verbindungen ($S_2$, $S_{2'}$, $S_1$) ein jeweiliges Signal-zu-Rausch-Verhältnis bestimmt wird,
   - anhand der bestimmten Signal-zu-Rausch-Verhältnisse der Verbindungen ($S_2$, $S_{2'}$, $S_1$) eine Wahl getroffen wird, ob eine Verbindungsübergabe zu dem weiteren Antennenelement der Sektorantenne der zweiten netzseitigen Station ($BS_2$) gemäß einer Softer-verbindungsübergabe oder zu der Antenne der ersten netzseitigen Station ($BS_1$) gemäß einer Soft-Verbindungsübergabe durchgeführt wird, und

- im Fall einer gewählten Softer-Verbindungsübergabe zu dem weiteren Antennenelement der Sektorantenne der zweiten netzseitigen Station ($BS_2$) eine maximale Verhältniskombination von empfangenen Signalen der ersten und zweiten Verbindung ($S_{2'}$, $S_2$) durchgeführt wird, und im Fall einer gewählten Soft-Verbindungsübergabe Signale der ersten und zweiten Verbindung ($S_{2'}$, $S_1$) nach einem Diversitätsschema empfangen werden, wobei für jeden Unterträger eine netzseitige Station ($BS_1$, $BS_2$) ausgewählt wird, welche ein höheres bestimmtes Signal-zu-Rausch-Verhältnis bietet.

**2.** Verfahren nach Anspruch 1, bei dem
die Übertragungseigenschaften aus unterschiedlichen Verschlechterungen der Übertragungsqualität auf den verschiedenen Unterträgern ($sc_k$) bestimmt werden.

**3.** Verfahren nach einem vorstehenden Anspruch, bei dem
als Unterträger ($sc_k$) verschiedene Unter-Frequenzbänder eines Träger-Frequenzbandes verwendet werden.

**4.** Verfahren nach einem vorstehenden Anspruch, bei dem
die Übertragung von Daten und Signalen nach dem Mehrträger-Prinzip durchgeführt wird.

**5.** Verfahren nach einem vorstehenden Anspruch, bei dem empfängerseitig eine Bestimmung oder Abschätzung von Übertragungseigenschaften mittels eines Fadingprofils des Trägerspektrums durchgeführt wird.

**6.** Verfahren nach einem vorstehenden Anspruch, bei dem
die Übertragungseigenschaften aus verschiedenen Signal-zu-Rausch-Verhältnissen einzelner der verschiedenen Unterträger ($sc_k$) bestimmt werden.

**7.** Verfahren nach einem vorstehenden Anspruch, bei dem

für die Übertragung für jeden Antennenpunkt ein Signalvektor ( $\vec{\tilde{I}}$ ) als Summe über die Signale ($\hat{I}_{i,k}$) der netzseitigen Stationen ($BS_i$) bestimmt wird, insbesondere gemäß

$$\vec{\tilde{I}} = \left\{ \sum_{i \in A_J} \alpha_{i,k}^{\ *} \cdot \hat{I}_{i,k} \Big| k = 1,2... \right\} ,$$

wobei das sich ergebende Signal $\hat{I}_{i,k}$ das Signal ist, welches für jeden einzelnen Sektorantennenpunkt verarbeitet bzw. erzeugt wird, $\alpha_{i,k}$ eine Fadingvariable gemäß dem Verhältnis von der Antenne der netzseitigen Station ($BS_i$) und dem Unterträger ($sc_k$) ist und "*" eine komplexkonjugierte Operation zum Erreichen des Maximums gemäß der Cauchy-Schwartz-Ungleichung indiziert.

**8.** Verfahren nach einem vorstehenden Anspruch, bei dem zumindest eine der netzseitigen Stationen ($BS_2$) eine Sektorantenne mit verschiedenen Antennenelementen zum Aufbauen von zumindest zwei eigenständigen Verbindungen ($S_2$, $S_{2'}$) zu der teilnehmerseitigen Station (MU) an einem Sende/Empfangsort aufweist.

**9.** Verfahren zum Durchführen einer Verbindungsübergabe in einem Kommunikationssystem mit

- zumindest zwei netzseitigen Stationen ($BS_1$, $BS_2$) und
- zumindest einer teilnehmerseitigen Station (MU), bei dem
- Signale auf Verbindungen ($S_1$, $S_2$) zwischen der teilnehmerseitigen Station (MU) und den netzseitigen Stationen ($BS_1$, $BS_2$) auf einer jeweils zugeordneten Mehrzahl von Unterträgern ($sc_k$) über eine Funk-Schnittstelle übertragen werden, wobei Signale auf einer ersten Verbindung ($S_2$) zu einem Antennenelement einer zweiten netzseitigen Station ($BS_2$) unter Verwendung einer Mehrzahl von Unterträgern übertragen werden,
- abhängig von ermittelten aktuellen oder erwarteten zukünftigen Übertragungseigenschaften auf den jeweiligen Unterträgern ($sc_k$) eine Verbindungsübergabe initiiert wird,
- im Rahmen der Verbindungsübergabe eine zweite Verbindung ($S_1$) zu einer Antenne einer ersten netzseitigen Station ($BS_1$) unter Verwendung der Mehrzahl von Unterträgern ($sc_k$) gemäß einer Soft-Verbindungsübergabe aufgebaut wird,
- auf der Mehrzahl von Unterträgern ($sc_k$) der Verbindungen ($S_2$, $S_1$) ein jeweiliges Signal-zu-Rausch-Verhältnis bestimmt wird, und

- Signale der ersten und zweiten Verbindung ($S_{2'}$, $S_1$) nach einem Diversitätsschema empfangen werden, wobei für jeden Unterträger eine netzseitige Station ($BS_1$, $BS_2$) ausgewählt wird, welche ein höheres bestimmtes Signal-zu-Rausch-Verhältnis bietet.

**10.** Kommunikationssystem, aufweisend

- zumindest zwei netzseitige Stationen ($BS_1$, $BS_2$),
- zumindest eine die zumindest zwei netzseitigen Stationen ($BS_1$, $BS_2$) steuernde Stationssteuerung (RNC/BSC), und
- zumindest eine teilnehmerseitige Station (MU),

wobei

- die zumindest zwei netzseitigen Stationen ($BS_1$, $BS_2$) Mittel aufweisen zum Übertragen von Signalen auf Verbindungen ($S_1$, $S_2$, $S_{2'}$) zwischen der teilnehmerseitigen Station (MU) und den netzseitigen Stationen ($BS_i$) auf einer jeweils zugeordneten Mehrzahl von Unterträgern ($sc_k$) über eine Funk-Schnittstelle, wobei Signale auf einer ersten Verbindung ($S_2$) zu einem Antennenelement einer Sektorantenne einer zweiten netzseitigen Station ($BS_2$) unter Verwendung einer Mehrzahl von Unterträgern übertragen werden,
- die zweite netzseitige Station ($BS_2$) oder die Stationssteuerung (RNC/BSC) Mittel aufweist zum Initiieren einer Verbindungsübergabe abhängig von von einer Steuereinrichtungen (C) der zweiten netzseitigen Station ($BS_2$) ermittelten aktuellen oder erwarteten zukünftigen Übertragungseigenschaften auf den jeweiligen Unterträgern ($sc_k$),
- im Rahmen der Verbindungsübergabe eine jeweils zweite Verbindung ($S_{2'}$, $S_1$) zu einem weiteren Antennenelement der Sektorantenne der zweiten netzseitigen Station ($BS_2$) und zu einer Antenne der ersten netzseitigen Station ($BS_1$) aufgebaut wird,
- von Steuereinrichtungen (C) der netzseitigen Stationen ($BS_1$, $BS_2$) auf allen oder auf einzelnen ausgewählten der Mehrzahl von Unterträgern ($sc_k$) der Verbindungen ($S_2$, $S_{2'}$, $S_1$) ein jeweiliges Signal-zu-Rausch-Verhältnis bestimmt wird,
- von einer Auswahleinrichtung (Soft/Softer-Handover) in einer der netzseitigen Stationen ($BS_1$, $BS_2$) oder in der Stationssteuerung (RNC/BSC) anhand der bestimmten Signal-zu-Rausch-Verhältnisse der Verbindungen ($S_2$, $S_{2'}$, $S_1$) eine Wahl getroffen wird, ob eine Verbindungsübergabe zu dem weiteren Antennenelement der Sektorantenne der zweiten netzseitigen Station ($BS_2$) gemäß einer Softer-Verbindungsübergabe oder zu der Antenne der ersten netzseitigen Station ($BS_1$) gemäß einer Soft-Verbindungsübergabe durchgeführt wird, und
- im Fall einer gewählten Softer-Verbindungsübergabe zu dem weiteren Antennenelement der Sektorantenne der zweiten netzseitigen Station ($BS_2$) in der Auswahleinrichtung (Soft/Softer-Handover) eine maximale Verhältniskombination von empfangenen Signalen der ersten und zweiten Verbindung ($S_{2'}$, $S_2$) durchgeführt wird, und im Fall einer gewählten Soft-Verbindungsübergabe Signale der ersten und zweiten Verbindung ($S_{2'}$, $S_1$) nach einem Diversitätsschema empfangen werden, wobei in der Auswahleinrichtung (Soft/Softer-Handover) für jeden Unterträger eine netzseitige Station ($BS_1$, $BS_2$) ausgewählt wird, welche ein höheres bestimmtes Signal-zu-Rausch-Verhältnis bietet.

**11.** Kommunikationssystem, aufweisend

- zumindest zwei netzseitige Stationen ($BS_1$, $BS_2$),
- zumindest eine die zumindest zwei netzseitigen Stationen ($BS_1$, $BS_2$) steuernde Stationssteuerung (RNC/BSC), und
- zumindest eine teilnehmerseitige Station (MU),

wobei

- die zumindest zwei netzseitigen Stationen ($BS_1$, $BS_2$) Mittel aufweisen zum Übertragen von Signalen auf Verbindungen ($S_1$, $S_2$) zwischen der teilnehmerseitigen Station (MU) und den netzseitigen Stationen ($BS_1$, $BS_2$) auf einer jeweils zugeordneten Mehrzahl von Unterträgern ($sc_k$) über eine Funk-Schnittstelle, wobei Signale auf einer ersten Verbindung ($S_2$) zu einem Antennenelement einer Sektorantenne einer zweiten netzseitigen Station ($BS_2$) unter Verwendung einer Mehrzahl von Unterträgern übertragen werden,
- die zweite netzseitige Station ($BS_2$) oder die Stationssteuerung (RNC/BSC) Mittel aufweist zum Initiieren einer Verbindungsübergabe abhängig von von einer Steuereinrichtungen (C) der zweiten netzseitigen Station ($BS_2$)

ermittelten aktuellen oder erwarteten zukünftigen Übertragungseigenschaften auf den jeweiligen Unterträgern ($sc_k$),

- im Rahmen der Verbindungsübergabe eine zweite Verbindung ($S_1$) zu einer Antenne der ersten netzseitigen Station ($BS_1$) unter Verwendung der Mehrzahl von Unterträgern ($sc_k$) gemäß einer Soft-Verbindungsübergabe aufgebaut wird,

- von Steuereinrichtungen (C) der netzseitigen Stationen ($BS_1$, $BS_2$) auf der Mehrzahl von Unterträgern ($sc_k$) der Verbindungen ($S_2$, $S_1$) ein jeweiliges Signal-zu-Rausch-Verhältnis bestimmt wird, und

- in einer Auswahleinrichtung (Soft/Softer-Handover) in einer der netzseitigen Stationen ($BS_1$, $BS_2$) oder in der Stationssteuerung (RNC/BSC) Signale der ersten und zweiten Verbindung ($S_2$, $S_1$) nach einem Diversitätsschema empfangen werden, wobei in der Auswahleinrichtung (Soft/Softer-Handover) für jeden Unterträger eine netzseitige Station ($BS_1$, $BS_2$) ausgewählt wird, welche ein höheres bestimmtes Signal-zu-Rausch-Verhältnis bietet.

**Claims**

1. Method for carrying out a handover in a communication system with

   - at least two network stations ($BS_i$, $BS_2$ and
   - at least one user station (MU), with
   - signals being transmitted on connections ($S_1$, $S_2$, $S_{2'}$), between the user station (MU) and the network station ($BS_1$, $BS_2$) in each case on an assigned majority of subcarriers ($sc_k$) via a radio interface, with the signals on a first connection ($S_2$) being transmitted to an antenna element of a sector antenna of a second network station ($BS_2$) using a majority of subcarriers,
   - a handover being initiated depending on determined actual or expected future transmission properties on the respective subcarriers ($sc_K$),
   - as part of the handover, a second connection ($S_{2'}$, $S_1$) being established in each case to a further antenna element of the sector element of the second network station ($BS_2$) and to an antenna of a first network station ($BS_1$),
   - an actual signal-to-noise ratio being determined on all, or selected individual carriers, of the majority of subcarriers ($sc_K$) of the connections ($S_2$, $S_{2'}$, $S_1$),
   - a selection being made using the determined signal-to-noise ratios of the connections ($S_2$, $S_{2'}$, $S_1$) as to whether a handover to a further antenna element of the sector antenna of the second network station ($BS_2$) is to be carried out according to a softer handover or to the antenna of the first network station ($BS_1$) according to a soft handover , and
   - in the event of a selected softer handover to the other antenna element of the sector antenna of the second network station ($BS_2$) a maximum/ratio combination of received signals of the first and second connection ($S_{2'}$ , $S_2$) being carried out, and in the event of a selected soft handover, signals of the first and second connection ($S_{2'}$, $S_1$) being received according to a diversity schema, with a network station ($BS_1$, $BS_2$) that offers a higher specific signal-to-noise ratio being selected.

2. Method according to Claim 1,
   with the transmission properties being determined from different degrees of deterioration of the transmission quality on the different subcarriers ($sc_K$).

3. Method according to a preceding claim, with different sub-frequency bands of a carrier frequency band being used as subcarriers ($sc_k$).

4. Method according to a preceding claim, with the transmission of data and signals being carried out according to the multicarrier principle.

5. Method according to a preceding claim, with a determination or estimation of transmission properties being carried out at the receiver end by means of a fading profile of the carrier spectrum.

6. Method according to a preceding claim, with the transmission properties being determined from different signal-to-noise ratios of individual subcarriers of the different subcarriers ($sc_k$).

**7.** Method according to a preceding claim with a signal vector $( \vec{\hat{I}} )$ , as the sum) over the signals $(\hat{I}_{i,k})$ of the network stations ($BS_i$, being determined for each antenna point for the transmission, especially according to

$$\vec{\hat{I}} = \left\{ \sum_{i \in \tilde{\mathbf{A}}_j} \alpha_{i,k}^{\,*} \cdot \hat{I}_{i,k} \middle| k = 1,2... \right\} ,$$

with the resulting signal $\hat{I}_{i,k}$ being the signal that is processed or generated for each individual sector antenna point, $\alpha_{i,k}$ being a fading variable according to the ratio of the antenna of the network station ($BS_i$) and the subcarrier ($sc_k$) and "*" indicating a complex-conjugated operation for achieving the maximum according to the Cauchy-Schwartz inequation.

**8.** Method according to a preceding claim, with one of the network stations ($BS_2$) having a sector antenna with different antenna elements for establishing at least two independent connections ($S_2$, $S_{2'}$) to the user station (MU) at a transmitting/receiving point.

**9.** Method for carrying out a handover in a communication system with

- at least two network stations ($BS_1$, $BS_2$) and
- at least one user station (MU),
with
- signals on connections ($S_1$, $S_2$) being transmitted between the user station (MU) and the network stations ($BS_1$, $BS_2$) in each case on an assigned majority of subcarriers ($sc_K$) via a radio interface, with signals being transmitted on a first connection ($S_2$) to an antenna element of a second network station ($BS_2$) using a majority of subcarriers,
- a handover being initiated depending on the determined actual or expected future transmission properties on the respective subcarriers ($sc_K$),
- as part of the handover, a second connection ($S_1$) to an antenna of a first network station ($BS_1$) being established using the majority of the subcarriers ($sc_K$) in accordance with a soft handover,
- a respective signal-to-noise ratio being determined from the majority of the subcarriers ($sc_K$) of the connections ($S_2$, $S_1$) and
- signals of the first and second connection ($S_{2'}$, $S_1$) being received according to a diversity schema with a network station ($BS_1$, $BS_2$) that offers a higher specific signal-to-noise ratio being selected for each subcarrier.

**10.** Communication system,

- having at least two network stations ($BS_1$, $BS_2$),
- at least one station controller (RNC/BSC) controlling at least two network stations ($BS_1$, $BS_2$) and
- at least one user station (MU),
with
- the at least two network stations ($BS_1$, $BS_2$) having means for transmitting signals on connections ($S_1$, $S_2$, $S_{2'}$) between the user station (MU) and the network stations ($BS_1$) on an assigned majority of subcarriers ($sc_K$) in each case via a radio interface, with signals on a first connection ($S_2$) being transmitted to an antenna element of a sector antenna of a second network station ($BS_2$) using a majority of subcarriers,
- the second network station ($BS_2$) or the station controller (RNC/BSC) having means for initiating a handover depending on actual or expected future transmission properties on the respective subcarriers ($sc_K$) determined by a controller (C) of the second network station ($BS_2$),
- as part of the handover a second connection ($S_{2'}$, $S_1$) being established in each case to a further antenna element of the sector antenna of the second network station ($BS_2$) and to an antenna of the first network station ($BS_{1)}$,
- a respective signal-to-noise ratio being determined by controllers (C) of the network stations ($BS_1$, $BS_2$) on all, or on selected individual subcarriers, of the majority of subcarriers ($sc_K$) of connections ($S_2$, $S_{2'}$, $S_{1)}$,
by means of a selector device (soft/softer handover) in one of the network stations ($BS_1$, $BS_2$) or in the station controller (RNC/BSC) a choice being made, on the basis of the specific signal-to-noise ratios of the connections ($S_2$, $S_{2'}$, $S_1$), as to whether a handover to a further antenna element of the sector antenna of the second network station ($BS_2$) is to be carried out according to a softer handover or to the antenna of the first network station

($BS_1$) according to a soft handover, and

- in the event of a selected softer handover to the further antenna element of the sector antenna of the second network station ($BS_2$) by the selection device (soft/softer handover), a maximum/ratio combination of received signals of the first and second connections ($S_{2'}$, $S_2$) is carried out, and in the event of a selected soft handover, signals of the first and second connection ($S_{2'}$, $S_1$) are received according to a diversity schema, with a network station ($BS_1$, $BS_2$) that offers a higher specific signal-to-noise ratio being selected in the selection device (soft/softer handover) for each subcarrier.

**11.** Combination system, having

- at least two network stations ($BS_1$, $BS_2$,)
- at least one station controller (RNC/BSC) controlling the at least two network stations ($BS_1$, $BS_2$,) and
- at least one user station (MU), with
- the at least two network stations ($BS_1$, $BS_2$) having means for the transmission of signals on connections ($S_1$, $S_2$) between the user station (MU) and the network stations ($BS_1$, $BS_2$) in each case on an assigned majority of subcarriers ($SC_K$) via a radio interface, with signals on a first connection ($S_2$) being transmitted to an antenna element of the sector antenna of the second network station ($BS_2$) using a majority of subcarriers,
- the second network station ($BS_2$) or the station controller (RNC/BSC) having means for initiating a handover depending on actual or anticipated future transmission properties on the respective subcarriers ($sc_K$) determined by a controller device (C) of the second network station ($BS_2$),
- as part of a handover, a second connection ($S_1$) to an antenna of the first network station ($BS_1$) being established according to a soft handover using a majority of subcarriers ($sc_{K)}$,
- a respective signal-to-noise ratio being determined on the majority of subcarriers ($sc_K$) of the connections ($S_2$, $S_1$) by controllers (C) of network stations ($BS_1$, $BS_2$) and
- signals of the first and second connection ($S_2$, $S_1$) being received in a selection device (soft/softer handover) in one of the network stations ($BS_1$, $BS_2$), or in the station controller (RNC/BSC), with a network station ($BS_1$, $BS_2$) that offers a higher specific signal-to-noise ratio being selected in the selection device (soft/softer handover) for each subcarrier.

**Revendications**

**1.** Procédé d'exécution d'un transfert de connexion dans un système de communication comprenant

- au moins deux stations côté réseau ($BS_1$, $BS_2$) et
- au moins une station côté abonné (MU),
dans lequel
- des signaux sont transmis, par le biais d'une interface radio, sur des connexions ($S_1$, $S_2$, $S_2'$) entre la station côté abonné (MU) et les stations côté réseau ($BS_1$, $BS_2$) sur une pluralité, à chaque fois associée, de sous-porteuses ($sc_k$), des signaux étant transmis sur une première connexion ($S_2$) vers un élément d'antenne d'une antenne de secteur d'une seconde station côté réseau ($BS_2$) en utilisant une pluralité de sous-porteuses,
- un transfert de connexion est initié en fonction de caractéristiques de transmission actuelles déterminées ou futures attendues sur les sous-porteuses respectives ($sc_k$),
- dans le cadre du transfert de connexion, une seconde connexion respective ($S_2'$, $S_1$) est établie vers un autre élément d'antenne de l'antenne de secteur de la seconde station côté réseau ($BS_2$) et vers une antenne d'une première station côté réseau ($BS_1$),
- un rapport signal/bruit respectif est déterminé sur toutes les sous-porteuses ou sur des sous-porteuses individuelles sélectionnées de la pluralité de sous-porteuses ($sc_k$) des connexions ($S_2$, $S_2'$, S1),
- un choix est réalisé sur la base des rapports signal/bruit déterminés des connexions ($S_2$, $S_2'$, S1) pour savoir si on exécute un transfert de connexion vers l'autre élément d'antenne de l'antenne de secteur de la seconde station côté réseau ($BS_2$) selon un transfert de connexion très souple ou vers l'antenne de la première station côté réseau ($BS_1$) selon un transfert de connexion souple et
- dans le cas où on choisit un transfert de connexion très souple vers l'autre élément d'antenne de l'antenne de secteur de la seconde station côté réseau ($BS_2$), une combinaison de rapport maximum de signaux reçus de la première et de la seconde connexions ($S_2'$, $S_2$) est exécutée et, dans le cas où on choisit un transfert de connexion souple, les signaux de la première et de la seconde connexions ($S_2'$, $S_1$) sont reçus selon un schéma de diversité, une station côté réseau ($BS_1$, $BS_2$) offrant un rapport signal/bruit déterminé plus élevé étant sélectionnée pour chaque sous-porteuse.

**2.** Procédé selon la revendication 1, dans lequel les caractéristiques de transmission sont déterminées à partir de différentes dégradations de la qualité de transmission sur les différentes sous-porteuses ($sc_k$).

**3.** Procédé selon l'une des revendications précédentes, dans lequel on utilise, en tant que sous-porteuses ($sc_k$), différentes sous-bandes de fréquence d'une bande de fréquence porteuse.

**4.** Procédé selon l'une des revendications précédentes, dans lequel la transmission de données et de signaux est exécutée selon le principe des porteuses multiples.

**5.** Procédé selon l'une des revendications précédentes, dans lequel une détermination ou évaluation de caractéristiques de transmission est exécutée, sur le côté de réception, au moyen d'un profil d'évanouissement du spectre des porteuses.

**6.** Procédé selon l'une des revendications précédentes, dans lequel les caractéristiques de transmission sont déterminées à partir de différents rapports signal/bruit de sous-porteuses individuelles parmi les différentes sous-porteuses ($SC_k$).

**7.** Procédé selon l'une des revendications précédentes, dans lequel on détermine, pour la transmission, pour chaque point d'antenne, un vecteur de signal ($\bar{\hat{I}}$) en tant que somme des signaux ($\hat{I}_{i,k}$) des stations côté réseau ($BS_i$), notamment selon la formule :

$$\bar{\hat{I}} = \left\{ \sum_{i \in k_s} \alpha_{i,k}^* \cdot \hat{I}_{i,k} \middle| k = 1,2,... \right\}$$

le signal $\hat{I}_{i,k}$ obtenu étant le signal qui est traité resp. produit pour chaque point d'antenne de secteur individuel, $\alpha_{i,k}$ étant une variable d'évanouissement selon le rapport de l'antenne de la station côté réseau ($BS_i$) et de la sous-porteuse ($sc_k$) et "*" indiquant une opération conjuguée complexe pour obtenir le maximum selon l'inégalité de Cauchy-Schwartz.

**8.** Procédé selon l'une des revendications précédentes, dans lequel au moins une des stations côté réseau ($BS_2$) comprend une antenne de secteur pourvue de différents éléments d'antenne pour l'établissement d'au moins deux connexions autonomes ($S_2$, $S_2$') vers la station côté abonné (MU) en un lieu d'émission/réception.

**9.** Procédé d'exécution d'un transfert de connexion dans un système de communication comprenant

- au moins deux stations côté réseau ($BS_1$, $BS_2$) et
- au moins une station côté abonné (MU),
dans lequel
- des signaux sont transmis, par le biais d'une interface radio, sur des connexions ($S_1$, $S_2$) entre la station côté abonné (MU) et les stations côté réseau ($BS_1$, $BS_2$) sur une pluralité, à chaque fois associée, de sous-porteuses ($sc_k$), des signaux étant transmis sur une première connexion ($S_2$) vers un élément d'antenne d'une seconde station côté réseau ($BS_2$) en utilisant une pluralité de sous-porteuses,
- un transfert de connexion est initié en fonction de caractéristiques de transmission actuelles déterminées ou futures attendues sur les sous-porteuses respectives ($sc_k$),
- dans le cadre du transfert de connexion, une seconde connexion ($S_1$) est établie vers une antenne d'une première station côté réseau ($BS_1$) en utilisant la pluralité de sous-porteuses ($sc_k$) selon un transfert de connexion souple,
- un rapport signal/bruit respectif est déterminé sur la pluralité de sous-porteuses ($sc_k$) des connexions ($S_2$, S1) et
- des signaux de la première et de la seconde connexions ($S_2$', $S_1$) sont reçus selon un schéma de diversité, une station côté réseau ($BS_1$, $BS_2$) offrant un rapport signal/bruit déterminé plus élevé étant sélectionnée pour chaque sous-porteuse.

**10.** Système de communication comprenant

- au moins deux stations côté réseau ($BS_1$, $BS_2$),

- au moins une commande de station (RNC/BSC) commandant les au moins deux stations côté réseau (BS$_1$, BS$_2$) et

- au moins une station côté abonné (MU),

- les au moins deux stations côté réseau (BS$_1$, BS$_2$) comprenant des moyens pour la transmission de signaux, par le biais d'une interface radio, sur des connexions (S$_1$, S$_2$, S$_2$') entre la station côté abonné (MU) et les stations côté réseau (BS$_i$) sur une pluralité, à chaque fois associée, de sous-porteuses (sc$_k$) , des signaux étant transmis sur une première connexion (S$_2$) vers un élément d'antenne d'une antenne de secteur d'une seconde station côté réseau (BS$_2$) en utilisant une pluralité de sous-porteuses,

- la seconde station côté réseau (BS$_2$) ou la commande de station (RNC/BSC) comprenant des moyens pour initier un transfert de connexion en fonction de caractéristiques de transmission actuelles déterminées par un dispositif de commande (C) de la seconde station côté réseau (BS$_2$) ou futures attendues sur les sous-porteuses respectives (sc$_k$),

- une seconde connexion respective (S$_2$', S$_1$) étant établie, dans le cadre du transfert de connexion, vers un autre élément d'antenne de l'antenne de secteur de la seconde station côté réseau (BS$_2$) et vers une antenne de la première station côté réseau (BS$_1$),

- un rapport signal/bruit respectif étant déterminé par des dispositifs de commande (C) des stations côté réseau (BS$_1$, BS$_2$) sur toutes les sous-porteuses ou sur des sous-porteuses individuelles sélectionnées de la pluralité de sous-porteuses (sc$_k$) des connexions (S$_2$, S$_2$', S$_1$),

- un choix étant réalisé par un dispositif de sélection (transfert souple/très souple) dans une des stations côté réseau (BS$_1$, BS$_2$) ou dans la commande de station (RNC/BSC) sur la base des rapports signal/bruit déterminés des connexions (S$_2$, S$_2$', S1) pour savoir si on exécute un transfert de connexion vers l'autre élément d'antenne de l'antenne de secteur de la seconde station côté réseau (BS$_2$) selon un transfert de connexion très souple ou vers l'antenne de la première station côté réseau (BS$_1$) selon un transfert de connexion souple et

- une combinaison de rapport maximum de signaux reçus de la première et de la seconde connexions (S$_2$', S$_2$) étant exécutée dans le cas où un transfert de connexion très souple vers l'autre élément d'antenne de l'antenne de secteur de la seconde station côté réseau (BS$_2$) est choisi dans le dispositif de sélection (transfert souple/très souple) et les signaux de la première et de la seconde connexions (S$_2$', S$_1$) étant reçus selon un schéma de diversité dans le cas où un transfert de connexion souple est choisi, une station côté réseau (BS$_1$, BS$_2$) offrant un rapport signal/bruit déterminé plus élevé étant sélectionnée pour chaque sous-porteuse dans le dispositif de sélection (transfert souple/très souple).

11. Système de communication comprenant

- au moins deux stations côté réseau (BS$_1$, BS$_2$),

- au moins une commande de station (RNC/BSC) commandant les au moins deux stations côté réseau (BS$_1$, BS$_2$) et

- au moins une station côté abonné (MU),

- les au moins deux stations côté réseau (BS$_1$, BS$_2$) comprenant des moyens pour la transmission de signaux, par le biais d'une interface radio, sur des connexions (S$_1$, S$_2$) entre la station côté abonné (MU) et les stations côté réseau (BS$_1$, BS$_2$) sur une pluralité, à chaque fois associée, de sous-porteuses (sc$_k$), des signaux étant transmis sur une première connexion (S$_2$) vers un élément d'antenne d'une antenne de secteur d'une seconde station côté réseau (BS$_2$) en utilisant une pluralité de sous-porteuses,

- la seconde station côté réseau (BS$_2$) ou la commande de station (RNC/BSC) comprenant des moyens pour initier un transfert de connexion en fonction de caractéristiques de transmission actuelles déterminées par un dispositif de commande (C) de la seconde station côté réseau (BS$_2$) ou futures attendues sur les sous-porteuses respectives (sc$_k$),

- une seconde connexion (S$_1$) étant établie, dans le cadre du transfert de connexion, vers une antenne de la première station côté réseau (BS$_1$) en utilisant la pluralité de sous-porteuses (sc$_k$) selon un transfert de connexion souple,

- un rapport signal/bruit respectif étant déterminé par des dispositifs de commande (C) des stations côté réseau (BS$_1$, BS$_2$) sur la pluralité de sous-porteuses (sc$_k$) des connexions (S$_2$, S1) et

- des signaux de la première et de la seconde connexions (S$_2$, S$_1$) étant reçus selon un schéma de diversité dans un dispositif de sélection (transfert souple/très souple) dans une des stations côté réseau (BS$_1$, BS$_2$) ou dans la commande de station (RNC/BSC), une station côté réseau (BS$_1$, BS$_2$) offrant un rapport signal/bruit déterminé plus élevé étant sélectionnée pour chaque sous-porteuse dans le dispositif de sélection (transfert souple/très souple).

| | |
|---|---|
| BSi | Basisstation |
| MU | Mobile Station |
| →  | Verbindungen |
| - - - - - | Zellbereich $Z_i$ |
| Y__Y | Sektorantenne |

**FIG 1**

andere Stationen

spektrale Spreizung

$a^{(m)}(i)$

$T_s$

$K$

Teilnehmer

$c^{(m)}(k)$

S/P

MC-Übertragung

$a^{(m)}(i)c^{(m)}(0)$

andere Stat.

$a^{(m)}(i)c^{(m)}(1)$

andere Stat.

$a^{(m)}(i)c^{(m)}(K+1)$

$\cos(2\pi f_c t + 2\pi \frac{0 t}{T_s})$

$\cos(2\pi f_c t + 2\pi \frac{t}{T_s})$

$\cos(2\pi f_c t + 2\pi \frac{K-1}{T_s} t)$

$\sum$

$s(t)$

**FIG 2**

BS₁

BSi    Basisstation
MU    Mobile Station
→    Verbindung
-------    Zellbereich

$S_1$

BS₂

$S_2$

MU

RNC/BSC

# FIG 3

BS    Basisstation
MU    Mobile Station
→    Verbindungen
-------    Zellbereiche
Y Y    Sektorantenne

$S_1$

$S_2$

BS

BS₂

M   C

MU

RNC/BSC

# FIG 4

16

# FIG 5

# FIG 6